# EUROPEAN PATENT SPECIFICATION

(11) **EP 3 626 096 B1**
(45) Date of publication and mention of the grant of the patent: **18.11.2026**
(21) Application number: 19182917.5
(22) Date of filing: 27.06.2019
(51) Int. Cl.: A41D 31/06, B32B 3/10, B32B 5/02, B32B 5/06, B32B 5/08, B32B 5/26, B32B 7/12

(54) **COMPOSITE FABRIC WITH MOVEABLE BAFFLES**
VERBUNDSTOFF MIT BEWEGLICHEN BAFFELN
TISSU COMPOSITE À BAFFLES MOBILES

(30) Priority: 05.07.2018 US 201862694189 P
(43) Date of publication of application: 25.03.2020
(73) Proprietor: The North Face Apparel Corp., Wilmington, DE 19810 (US)
(72) Inventor: Ly, John, Oakland California 94605 (US)
(74) Representative: Riesen, Michael J.

(56) References cited:
- WO-A1-2017/062539
- JP-A- 2017 143 984
- KR-B1- 101 053 255
- US-A1- 2004 040 087
- US-A1- 2013 309 929

## Description

### FIELD OF THE DISCLOSURE

The present disclosure relates to composite fabrics, and in particular to composite fabrics including a plurality of insulating structures that provide the composite fabric with thermal insulation.

### BACKGROUND OF THE DISCLOSURE

An article of apparel may include a material including an insulator. Examples of insulators include, natural filler materials such as down (e.g., goose or duck plumage) and synthetic filler materials such as polyester. The insulator may move within the material. For example, the insulator may move as a result of use of the article, movement of a wearer of the article, and/or the force of gravity.

Additionally, the insulator may not be evenly distributed throughout the material. As an example, the insulator may not be evenly distributed throughout the material as a result of the insulator moving within the material. As another example, the insulator may not be evenly distributed throughout the material as a result of the method of manufacturing the material and/or the method of disposing the insulator within the material. Consequently, the article of apparel may have regions of varying thermal insulation.

JP2017143984 discloses the preamble of claim 1.

These and other shortcomings are addressed by aspects of the disclosure.

### SUMMARY

In accordance with the present invention, a composite fabric is provided according to claim 1. Preferred embodiments of the invention are provided according to the dependent claims.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1A is a top perspective view of a composite fabric according to the invention.
FIG. 1B is a drawing of one side of the composite fabric of FIG. 1A.
FIG. 1C is a drawing of another side of the composite fabric of FIG. 1A.
FIG. 2A is a top perspective view of a composite fabric according to an aspect of the disclosure not forming part of the invention.
FIG. 2B is a drawing of the composite fabric of FIG. 2A.

### DETAILED DESCRIPTION

The present disclosure can be understood more readily by reference to the following detailed description of the disclosure and the Examples included therein. In various aspects, the present disclosure pertains to composite fabrics as recited in Claim 1.

Various combinations of elements of this disclosure are encompassed by this disclosure, e.g., combinations of elements from dependent claims that depend upon the same independent claim.

### Definitions

It is also to be understood that the terminology used herein is for the purpose of describing particular aspects only and is not intended to be limiting. As used in the specification and in the claims, the term "comprising" can include the embodiments "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "an insulating material" includes mixtures of two or more insulating materials.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Composite Fabrics Including a First Fabric Layer and Insulating Structures

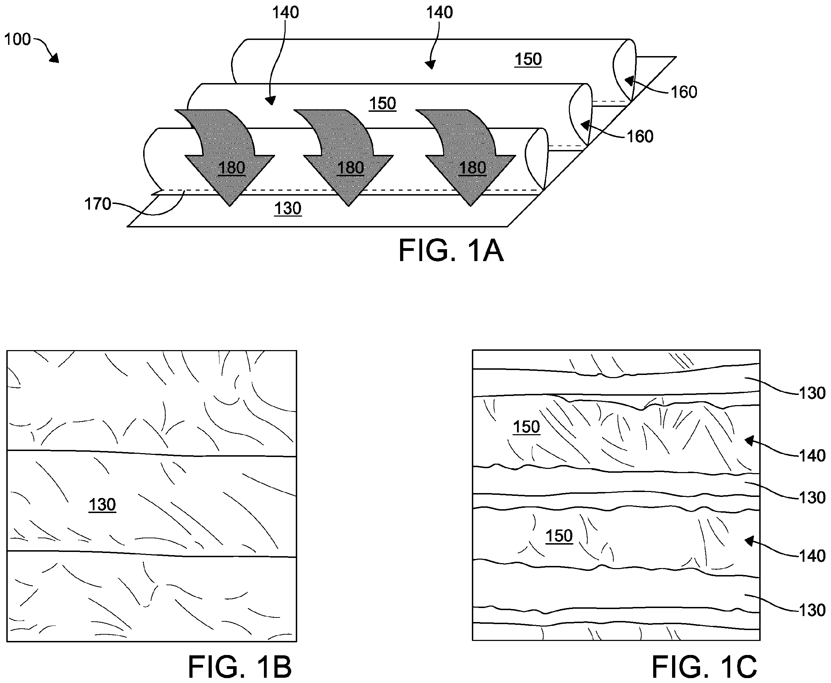

With reference to FIGS. 1A-2B, aspects of the disclosure relate to a composite fabric 100, 200 including a first fabric layer 130, 230 and a plurality of insulating structures 140, 240 adjacent to the first fabric layer 130, 230. In some aspects each of the plurality of insulating structures 140, 240 include a fabric shell 150, 250 defining a cavity 160, 260 and an insulating material (not shown) located within the cavity 160, 260.

The first fabric layer 130, 230 may be located on either side of a fabric and/or a garment formed therefrom. For example, in some aspects the first fabric layer 130, 230 is located on a body side of the composite fabric 100, 200, i.e., the side of the fabric facing towards the body of a user. In other aspects the first fabric layer 130, 230 is located on a face side of the composite fabric 100, 200, i.e., the side of the fabric facing away from the body of the user. In certain aspects the composite fabric 100, 200 is reversible such that a user of the fabric (e.g., a wearer of a garment including the composite fabric 100, 200) could use the composite fabric with the first fabric layer 130, 230 facing towards the user or away from the user. Also as used herein, "adjacent" means on or in proximity to and does not foreclose intervening components, including additional fabric layer(s), air or fluid.

With reference to FIG. 1A-1C, in the invention each of the plurality of insulating structures 140 are attached to the first fabric layer 130. In the invention each of the plurality of insulating structures 140 are stitched 170 to the first fabric layer (bottom of insulating structure 140 is stitched directly to the first fabric layer 130. In embodiments not forming part of the invention, the plurality of insulating structures 140 could be attached to the first fabric layer 130 by any suitable method, such as with an adhesive, sewn, knit or welded.

The plurality of insulating structures 140 shown in FIGS. 1A-1C are loosely attached ( stitched 170) to the first fabric layer 130 such that they are free to move. When the fabric is used (e.g., worn), the plurality of insulating structures may lay down against the first fabric layer 130 (illustrated by the arrows 180), forming a warm insulating layer in the composite fabric 100.

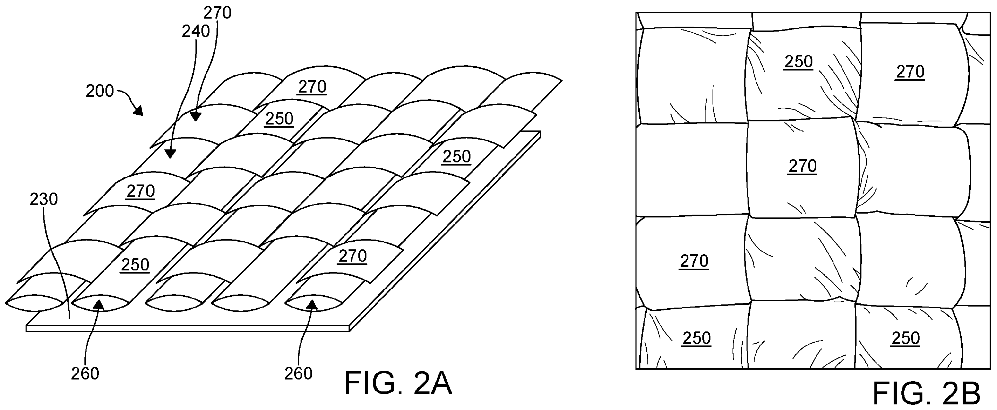

With reference to FIGS. 2A and 2B, in further aspects not forming part of the invention each of the plurality of insulating structures 240 are retained against the first fabric layer 230 by a plurality of fabric strips 270. The plurality of fabric strips 270 may in some aspects retain the plurality of insulating structures 240 against the first fabric layer 230 in a woven construction. Any suitable weave pattern may be used. In some aspects the weave pattern is a plain weave (1x1, illustrated). In certain aspects the weave pattern is a satin weave or a twill weave (e.g., 1x2, 1x3, 2x2, etc.). The components of the composite fabric 200 can have any desirable dimensions. For example, in some aspects the plurality of insulating structures 240 are sized so that when the fabric is used (e.g., worn) the plurality of insulating structures 240 lie against and/or substantially cover the first fabric layer 230, providing the composite fabric 200 with a layer of insulation.

The first fabric layer 130, 230 may have any suitable fabric construction. In some aspects the first fabric layer 130, 230 is a woven fabric. In other aspects the first fabric layer 130, 230 is a knit fabric, a nonwoven fabric or a laminate fabric. In particular aspects the first fabric layer 130, 230 includes taffeta, although any other suitable fabric material may be used, including but not limited to cotton, wool, nylon, polyester and combinations thereof.

In the invention the first fabric layer 130 is highly breathable, or air permeable. Air permeability may be determined in accordance with ASTM D737, and is reported in cubic meters per minute (m³/min) and cubic feet per minute (CFM). In the invention the first fabric layer 130 has an air permeability of from about 1.133 (m³/min) (40 CFM) to about 2.265 m³/min (80 CFM) when tested in accordance with ASTM D737. In particular aspects the first fabric layer 130, 230 has an air permeability of from about 1.416 m³/min (50 CFM) to about 1.699 m³/min (60 CFM) when tested in accordance with ASTM D737. The high air permeability of the first fabric layer 130, 230 provides a breathable layer to the composite fabric 100, 200 that allows moisture to pass therethrough.

The fabric shell 150, 250 can have any suitable fabric construction. In some aspects the fabric shell 150, 250 is a woven fabric, a knit fabric, a nonwoven fabric or a laminate fabric. In particular aspects the fabric shell 150, 250 includes taffeta, although any other suitable fabric material may be used, including but not limited to cotton, wool, polyester, nylon and combinations thereof.

It is desirable in the invention for the fabric shell 150, 250 to be substantially impermeable to air or to have a very low permeability. In the invention the fabric shell 150 has an air permeability of from 0.0 m³/min (0 CFM) to about 0.142 m³/min (5 CFM) when tested in accordance with ASTM D737. In further aspects the fabric shell 150, 250 has an air permeability of from 0.0 m³/min (0 CFM) to about 0.057 m³/min (2 CFM) when tested in accordance with ASTM D737. The use of an impermeable or substantially impermeable fabric for the fabric shell 150, 250 provides warmth to the fabric and encapsulates the insulating material in the cavity 160, 260 to prevent or minimize migration or movement of the insulating material within the composite fabric 100, 200.

As noted, each of the plurality of insulating structures 140, 240 include a fabric shell 150, 250 defining a cavity 160, 260 and an insulating material located within the cavity 160, 260. Any suitable insulating material can be used, including a natural insulation material, a synthetic insulation material, or a combination thereof. In particular aspects the insulating material includes at least one natural insulating material, including down (e.g., goose or duck plumage). Other natural insulating materials that could be used in the composite fabric 100, 200 include, but are not limited to, cotton and wool. In further aspects the insulating material includes at least one synthetic insulating material, including polyester. Other synthetic insulating materials that could be used in the composite fabric 100, 200 include, but are not limited to, PrimaLoft^{®}, Thinsulate^{™}, Thermolite^{®}, Quallofil^{®}, ThermoBall^{™}, polyethylene terephthalate, polypropylene, acrylic and combinations thereof. The insulating material may be inserted into the cavity by any conventional process, including but not limited to air blowing, insertion, injection, and rapier insertion. In addition, the insulating material may be in any form. In some aspects the insulating material is a loose fiber; in other aspects the insulating material is shaped (e.g., in a tubular form).

### Composite Fabrics Including Insulating Structures and Spacers

Examples not part of the disclosure relate to a composite fabric including a plurality of insulating structures separated by a plurality of spacers. Each of the plurality of spacers includes a fabric material, and each of the plurality of insulating structures includes a fabric shell defining a cavity and an insulating material (not shown) located within the cavity.

In some examples the composite fabric is reversible such that a user of the fabric (e.g., a wearer of a garment including the composite fabric) could use the composite fabric with either side facing towards the user or away from the user.

The plurality of spacers may have any suitable fabric construction. In some examples the plurality of spacers are a woven fabric. In other examples the plurality of spacers are a knit fabric, a nonwoven fabric or a laminate fabric. In particular examples the plurality of spacers include taffeta, although any other suitable fabric material may be used, including but not limited to cotton, wool, polyester, nylon and combinations thereof. The plurality of spacers can have any desirable dimensions. In some examples - as illustrated - the plurality of spacers are strips of fabric.

The plurality of spacers and the fabric shell can have any suitable dimensions. In a certain example the plurality of spacers have a width of about 2.5 cm (about 1 inch (1")), and the fabric shell has a width of from about 12.5 cm (about 5") to about 15 cm (about 6"). In addition, the plurality of spacers and/or the fabric shell could have varying dimensions within the same composite fabric. The plurality of spacers may be sized so that when the fabric is used (e.g., worn) the plurality of insulating structures lie against and/or substantially overlap or cover the plurality of spacers, providing the composite fabric with a layer of insulation.

In certain examples the plurality of spacers are highly air permeable. In some examples the plurality of spacers have an air permeability of from about 1.133 (m³/min) (40 CFM) to about 2.265 m³/min (80 CFM) when tested in accordance with ASTM D737. In particular examples the plurality of spacers have an air permeability of from about1.416 m³/min (50 CFM) to about 1.699 m³/min (60 CFM) when tested in accordance with ASTM D737. The high air permeability of the plurality of spacers provides a breathable component to the composite fabric that allows moisture to pass therethrough.

The fabric shell can have any suitable fabric construction. In some examples the fabric shell is a woven fabric, a knit fabric, a nonwoven fabric or a laminate fabric. In particular examples the fabric shell includes taffeta, although any other suitable fabric material may be used, including but not limited to cotton, wool, polyester, nylon and combinations thereof.

It may be desirable in some examples for the fabric shell to be substantially impermeable to air or to have a very low permeability. In particular examples the fabric shell has an air permeability of from 0.0 m³/min (0 CFM) to about 0.142 m³/min (5 CFM) when tested in accordance with ASTM D737. In further examples the fabric shell has an air permeability of from 0.0 m³/min (0 CFM) to about 0.057 m³/min (2 CFM) when tested in accordance with ASTM D737. The use of an impermeable or substantially impermeable fabric for the fabric shell provides warmth to the fabric and encapsulates the insulating material in the cavity to prevent or minimize migration or movement of the insulating material within the composite fabric.

As noted, each of the plurality of insulating structures include a fabric shell defining a cavity and an insulating material located within the cavity. Any suitable insulating material can be used, including a natural insulation material, a synthetic insulation material, or a combination thereof. In particular examples the insulating material includes at least one natural insulating material, including down (e.g., goose or duck plumage). Other natural insulating materials that could be used in the composite fabric include, but are not limited to, cotton and wool. In further examples the insulating material includes at least one synthetic insulating material, including polyester. Other synthetic insulating materials that could be used in the composite fabric include, but are not limited to, PrimaLoft^{®}, Thinsulate^{™}, Thermolite^{®}, Quallofil^{®}, ThermoBall^{™}, polyethylene terephthalate, polypropylene, acrylic and combinations thereof. The insulating material may be inserted into the cavity by any conventional process, including but not limited to air blowing, insertion, injection and rapier insertion. In addition, the insulating material may be in any form. In some examples the insulating material is a loose fiber; in other examples the insulating material is shaped (e.g., in a tubular form).

The composite fabrics 100, 200 and the components thereof may be formed according to conventional processes (e.g., conventional sewing, weaving and knitting processes).

The composite fabrics 100, 200 described herein may be incorporated into a fabric and used to manufacture articles. Exemplary articles include articles of apparel, such as jackets, pants, hats, gloves, jumpsuits, and other outerwear. Other exemplary articles include, but are not limited to, blankets, sporting equipment (e.g., the lining of a helmet) and outdoor equipment.

Various combinations of elements of this disclosure are encompassed by this disclosure, e.g., combinations of elements from dependent claims that depend upon the same independent claim.

## Claims

1. A composite fabric (100) comprising:
a first fabric layer (130); and
a plurality of insulating structures (140) disposed adjacent to and loosely attached to the first fabric layer (130), each of the plurality of insulating structures (140) comprising a fabric shell (150) defining a cavity (160) and an insulating material located within the cavity (160);
wherein each of the plurality of insulating structures (140) are stitched at their bottom directly to the first fabric layer (130), so that the structures (140) are free to move relative to the first fabric layer (130) and may lay down against the first fabric layer (130), forming a warm insulating layer in the composite fabric (100) when the composite fabric (100) is used, **characterized in that** the first fabric layer (130) has an air permeability of from about 1.133 cubic meters per minute (m³/min) (40 cubic feet per minute (CFM)) to about 2.265 m³/min (80 CFM) when tested in accordance with ASTM D737, and wherein the fabric shell (150) has an air permeability of from 0.0 m3/min (0 CFM) to about 0.142 m3/min (5 CFM) when tested in accordance with ASTM D737.

2. The composite fabric (100) according to any of claim 1, wherein the first fabric layer (130) has an air permeability of from about 1.416 m³/min (50 CFM) to about 1.699 m³/min (60 CFM) when tested in accordance with ASTM D737.

3. The composite fabric (100) according to any of claims 1 to 2, wherein the fabric shell (150) has an air permeability of from 0.0 m³/min (0 CFM) to about 0.057 m³/min (2 CFM) when tested in accordance with ASTM D737.

## Patentansprüche

1. Verbundgewebe (100), umfassend:
eine erste Gewebeschicht (130); und
eine Vielzahl von Isolierstrukturen (140), die angrenzend an der ersten Gewebeschicht (130) angeordnet und lose an dieser befestigt sind, jede der Vielzahl von Isolierstrukturen (140) umfassend eine Gewebehülle (150), die einen Hohlraum (160) definiert, und ein Isoliermaterial, das sich innerhalb des Hohlraums (160) befindet;
wobei jede der Vielzahl von Isolierstrukturen (140) an ihrer Unterseite direkt an die erste Gewebeschicht (130) genäht ist, sodass die Strukturen (140) relativ zu der ersten Gewebeschicht (130) frei beweglich sind und sich an die erste Gewebeschicht (130) anlegen können, wobei sie eine warme Isolierschicht in dem Verbundgewebe (100) ausbilden, wenn das Verbundgewebe (100) verwendet wird, **dadurch gekennzeichnet, dass**
die erste Gewebeschicht (130) eine Luftdurchlässigkeit von etwa 1,133 Kubikmetern pro Minute (m³/min) (40 Kubikfuß pro Minute (CFM)) bis etwa 2,265 m³/min (80 CFM) aufweist, wenn sie gemäß ASTM D737 geprüft wird, und wobei die Gewebehülle (150) eine Luftdurchlässigkeit von 0,0 m3/min (0 CFM) bis etwa 0,142 m3/min (5 CFM) aufweist, wenn sie gemäß ASTM D737 geprüft wird.

2. Verbundgewebe (100) nach Anspruch 1, wobei die erste Gewebeschicht (130) eine Luftdurchlässigkeit von etwa 1,416 m³/min (50 CFM) bis etwa 1,699 m³/min (60 CFM) aufweist, wenn sie gemäß ASTM D737 geprüft wird.

3. Verbundgewebe (100) nach einem der Ansprüche 1 bis 2, wobei die Gewebehülle (150) eine Luftdurchlässigkeit von 0,0 m³/min (0 CFM) bis etwa 0,057 m³/min (2 CFM) aufweist, wenn sie gemäß ASTM D737 geprüft wird.

## Revendications

1. Tissu composite (100) comprenant :
une première couche de tissu (130) ; et
une pluralité de structures isolantes (140) disposées de manière adjacente à et fixées de manière lâche à la première couche de tissu (130), chacune de la pluralité de structures isolantes (140) comprenant une couche extérieure en tissu (150) définissant une cavité (160) et un matériau isolant situé à l'intérieur de la cavité (160) ;
dans lequel chacune de la pluralité de structures isolantes (140) est cousue au niveau de sa partie inférieure directement à la première couche de tissu (130), de sorte que les structures (140) sont libres de se déplacer par rapport à la première couche de tissu (130) et peuvent se coucher contre la première couche de tissu (130), formant une couche isolante chaude dans le tissu composite (100) lorsque le tissu composite (100) est utilisé,
**caractérisé en ce que**
la première couche de tissu (130) a une perméabilité à l'air allant d'environ 1,133 mètre cube par minute (m3/min) (40 pieds cubes par minute (CFM)) à environ 2,265 m³/min (80 CFM) lorsqu'elle est testée conformément à ASTM D737, et dans lequel la couche extérieure en tissu (150) a une perméabilité à l'air allant de 0,0 m³/min (0 CFM) à environ 0,142 m³/min (5 CFM) lorsqu'elle est testée conformément à ASTM D737.

2. Tissu composite (100) selon l'une quelconque de la revendication 1, dans lequel la première couche de tissu (130) présente une perméabilité à l'air allant d'environ 1,416 m³/min (50 CFM) à environ 1,699 m³/min (60 CFM) lorsqu'elle est testée conformément à la norme ASTM D737.

3. Tissu composite (100) selon l'une quelconque des revendications 1 à 2, dans lequel la couche extérieure en tissu (150) a une perméabilité à l'air allant de 0,0 m³/min (0 CFM) à environ 0,057 m³/min (2 CFM) lorsqu'elle est testée conformément à ASTM D737.
